Europäisches Patentamt

European Patent Office

Office européen des brevets

(19)

(11) EP 1 498 713 A1

(12) EUROPÄISCHE PATENTANMELDUNG

(43) Veröffentlichungstag:
19.01.2005 Patentblatt 2005/03

(51) Int Cl.⁷: G01K 7/16, G01K 7/02

(21) Anmeldenummer: 04016848.6

(22) Anmeldetag: 16.07.2004

(84) Benannte Vertragsstaaten:
AT BE BG CH CY CZ DE DK EE ES FI FR GB GR
HU IE IT LI LU MC NL PL PT RO SE SI SK TR
Benannte Erstreckungsstaaten:
AL HR LT LV MK

(30) Priorität: 17.07.2003 DE 10332540

(71) Anmelder: SIEMENS AKTIENGESELLSCHAFT
80333 München (DE)

(72) Erfinder:
• Burmeister, Dirk
  76767 Hagenbach (DE)
• Chemisky, Eric
  67630 Lauterbourg (FR)

(54) **Verfahren zur Temperaturmessung sowie Einrichtung zur Durchführung des Verfahrens**

(57)     Die Erfindung betrifft ein Verfahren und eine Einrichtung zur Temperaturmessung mit einem Messfühler (7), der einen temperaturabhängigen Widerstand (RTD) und zur Kompensation der Trägheit des Widerstands bei dynamischen Temperaturänderungen ein Thermoelementepaar (TC1, TC2) aufweist, das in einer Differenzschaltung betrieben wird. Zur schnellen und genauen Temperaturmessung über einen weiten Temperaturbereich wird der durch den temperaturabhängigen Widerstand fließende Strom ($I_{RTD}$) in Abhängigkeit der aktuellen Arbeitstemperatur derart eingestellt, dass er einem für diese Arbeitstemperatur ermittelten Quotienten aus einer Temperaturempfindlichkeit des Thermoelementepaares und einer Temperaturempfindlichkeit des Widerstands proportional ist.

FIG 1

EP 1 498 713 A1

**Beschreibung**

Die Erfindung betrifft ein Verfahren zur Temperaturmessung nach dem Oberbegriff des Anspruchs 1 sowie eine Einrichtung zur Durchführung des Verfahrens nach dem Oberbegriff des Anspruchs 3.

In chemischen oder kraftwerkstechnischen Anlagen sind häufig Prozesse zu regeln, bei denen sich die Temperatur von Flüssigkeiten oder Gasen in Folge chemischer Reaktionen, schneller Druckänderungen oder großer Wärmezu- oder -abfuhr innerhalb weniger als einer Sekunde sehr stark ändert. Für die Messung der Medientemperatur verwendete Temperaturmessumformer oder -aufnehmer müssen daher die Prozesstemperatur nicht nur sehr genau messen, sondern auch sehr schnell auf Temperaturänderungen reagieren. Für Temperaturmessungen haben sich in der Praxis zum einen Widerstandsthermometer und zum anderen Thermoelemente durchgesetzt. Mit Widerstandsthermometern sind sehr präzise Messungen möglich. Bedingt durch ihren robusten Aufbau haben sie jedoch den Nachteil, relativ träge auf Temperaturänderungen zu reagieren. Für schnelle Temperaturmessungen werden daher Thermoelemente bevorzugt. Da Thermoelemente aber Messsignale mit vergleichsweise niedrigen Pegeln liefern, sind die Messungen bei Verwendung üblicher Auswerteeinrichtungen nicht so präzise wie mit Widerstandsthermometern.

Aus der Siemens Betriebseinleitung mit der Bestellnummer C73000-B7100-C152-3 zur TELEPERM-Messeinrichtung 7NG1212 für schnelle und genaue Temperaturmessungen ist ein Messwertaufnehmer bekannt, in welchem ein temperaturabhängiger Widerstand mit einem Thermoelementepaar kombiniert ist. Im ausgeglichenen oder stationären Zustand wird die Temperatur des Messmediums mit einem hochgenauen Messwiderstand Pt 100 erfasst. Um die durch den robusten Aufbau des Messwiderstandes bedingte Trägheit bei Temperaturänderungen zu überwinden, sind zwei Thermoelemente in Differenzschaltung in Reihe zu dem Messwiderstand geschaltet. Das eine Thermoelement ist gut wärmeschlüssig in der Spitze des Messwertaufnehmers angeordnet und reagiert deshalb besonders schnell. Die träge Messstelle des anderen Thermoelements ist wärmeschlüssig mit dem Messwiderstand verbunden. Ändert sich die Temperatur des Messmediums, so gibt das in der Spitze des Messwertaufnehmers angeordnete Thermoelement sofort eine der Temperaturdifferenz entsprechende Spannung ab. Allmählich ändert auch das träge Thermoelement gemeinsam mit dem Messwiderstand seine Temperatur auf den neuen Wert und die Spannung des Thermoelementepaares geht in der Differenzschaltung auf Null zurück. Eine Konstantstromquelle mit einer Linearisierungsschaltung stellt den durch den temperaturabhängigen Widerstand fließenden Strom derart ein, dass eine temperaturlineare Ausgangskennlinie des Messformers erreicht wird. Der bekannte Messumformer hat jedoch den Nachteil, dass er eine schnelle und genaue Temperaturmessung nur in einem sehr kleinen Temperaturbereich gestattet. Soll über einen weiten Temperaturbereich gemessen werden, müssen mehrere Messumformer vorgesehen werden, die jeweils auf unterschiedliche Teilbereiche des Messbereichs optimiert sind. Dies ist mit einem hohen Aufwand verbunden.

Der Erfindung liegt die Aufgabe zugrunde, ein Verfahren zur Temperaturmessung sowie eine Einrichtung zur Durchführung des Verfahrens zu schaffen, die eine schnelle und genaue Temperaturmessung mit einem einzelnen Messumformer über einen größeren Temperaturbereich ermöglichen.

Zur Lösung dieser Aufgabe weist das neue Verfahren der eingangs genannten Art die im kennzeichnenden Teil des Anspruchs 1 angegebenen Merkmale auf. Eine Einrichtung zur Durchführung des Verfahrens ist in Anspruch 3, vorteilhafte Weiterbildungen sind in den abhängigen Ansprüchen beschrieben.

Die Erfindung hat den Vorteil, dass mit demselben Messumformer, der zur genauen und schnellen Temperaturmessung mit einer Kombination aus temperaturabhängigem Widerstand und Thermoelementepaar arbeitet, nicht nur in einem kleinen Temperaturbereich, auf welchen der Messumformer optimiert wurde, schnelle und genaue Temperaturmessungen möglich sind, sondern in einem wesentlich vergrößerten Temperaturbereich. Dies wird insbesondere dadurch erreicht, dass der Speisestrom des temperaturabhängigen Widerstands an das bei der jeweiligen Arbeitstemperatur herrschende Verhältnis der Temperaturempfindlichkeiten von Widerstand und Thermoelementepaar angepasst wird. Die Einstellung des Speisestroms wird also auf die jeweils herrschende Arbeitstemperatur optimiert. Dadurch ist es nicht mehr erforderlich, mehrere Messumformervarianten für unterschiedliche Temperaturbereiche zu verwenden, wenn ein größerer Bereich abgedeckt werden soll.

Der Quotient der beiden Temperaturempfindlichkeiten kann in besonders einfacher Weise durch eine Recheneinheit anhand einer in einem Speicher hinterlegten Temperaturkennlinie der Temperaturempfindlichkeit des Thermoelementepaares und einer in einem Speicher hinterlegten Temperaturkennlinie der Temperaturempfindlichkeit des temperaturabhängigen Widerstands ermittelt werden. Dazu ist eine übliche Mikroprozessorschaltung verwendbar. Das hat weiterhin den Vorteil, dass als temperaturabhängiger Widerstand und als Thermoelemente beliebige Elemente im Temperaturaufnehmer gewählt werden können, da der für den temperaturabhängigen Widerstand benötigte Speisestrom für beliebige Verhältnisse der jeweiligen Temperaturempfindlichkeiten ermittelt und eingestellt werden kann.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:

Figur 1     ein Blockschaltbild mit Teilen eines Messumformers und

Figur 2     qualitative Verläufe der Messspannungen bei einer Temperaturänderung.

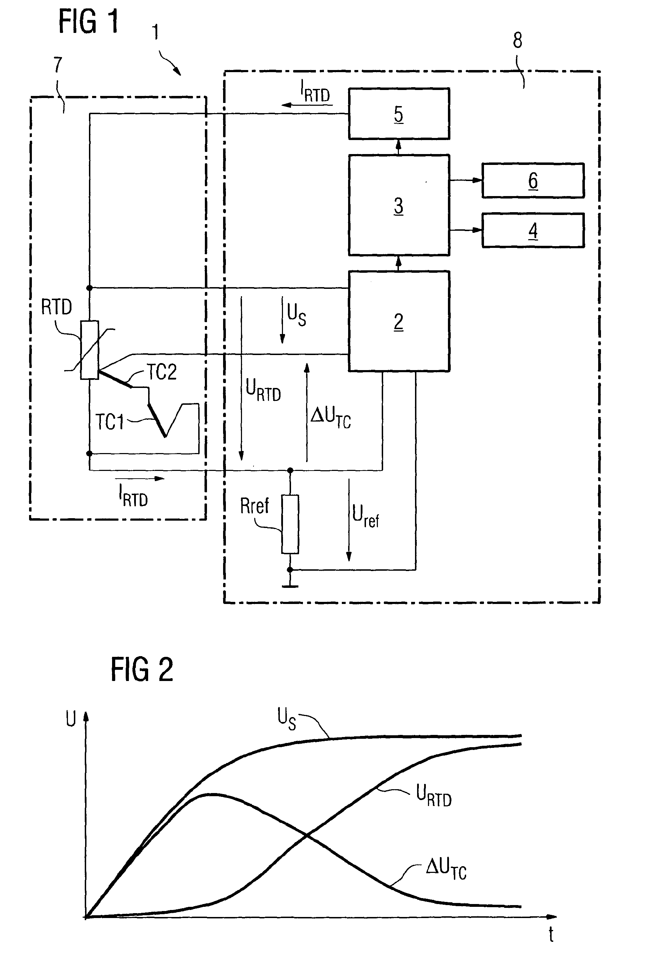

In Figur 1 sind einige Teile eines Messumformers 1 dargestellt, die zum leichteren Verständnis der Erfindung dienen können. Der Messumformer 1 ist funktional aufgeteilt in einen Messfühler 7 und eine Auswerteeinrichtung 8. Diese Aufteilung muss sich selbstverständlich nicht in der physikalischen Ausgestaltung des Messumformers 1 wiederspiegeln. Als temperaturempfindliche Bauelemente weist der Messumformer 1 einen temperaturabhängigen Widerstand RTD und zwei Thermoelemente TC1 und TC2 auf. Die beiden Thermoelemente TC1 und TC2 sind als ein Thermoelementepaar in Differenzschaltung in Reihe zu dem Widerstand RTD geschaltet. Für eine an dieser Reihenschaltung abgegriffene Summenspannung $U_s$ gilt:

$$U_s = U_{RTD} + \Delta U_{TC},$$

mit

$U_{RTD}$ - Spannung über dem temperaturabhängigen Widerstand RTD und

$\Delta U_{TC}$ - Differenzspannung des Thermoelementepaares.

Das eine Thermoelement TC1 ist gut wärmeschlüssig in der Spitze des Messfühlers 7 angeordnet und reagiert daher sehr schnell auf Temperaturänderungen. Das andere Thermoelement TC2 ist gut wärmeschlüssig mit dem temperaturabhängigen Widerstand RTD verbunden und reagiert bei Temperaturänderungen vergleichsweise träge.

Ändert sich die Temperatur des Messmediums, so liefert die Differenzschaltung mit den beiden Thermoelementen TC1 und TC2 einen Verlauf der Spannung $\Delta U_{TC}$, wie er in Figur 2 qualitativ dargestellt ist. Auf der Abszisse ist die Zeit t, auf der Ordinate die Spannung U aufgetragen. Die Spannung $\Delta U_{TC}$, die über dem Thermoelementepaar entsteht, steigt vergleichsweise schnell an. Die Spannung ist etwa proportional der Temperaturdifferenz zwischen Anfangswert und Endwert der Temperaturänderung des Messmediums. Mit zunehmender Erwärmung des anderen Thermoelements TC2, das mit dem temperaturabhängigen Widerstand RTD wärmegekoppelt ist und damit wie dieses träge auf Temperaturänderungen reagiert, verringert sich die über den beiden Thermoelementen TC1 und TC2 abgreifbare Spannung $\Delta U_{TC}$. Haben der temperaturabhängige Widerstand RTD und das Thermoelementepaar die neue zu messende Temperatur angenommen, so geht die Spannung $\Delta U_{TC}$ auf Null zurück und die über dem temperaturabhängigen Widerstand RTD abfallende Spannung $U_{RTD}$ bildet den Hauptanteil der Summenspannung $U_s$.

In Figur 2 ist an dem Verlauf der Spannung $U_{RTD}$ deutlich zu erkennen, dass die Messwerte gegenüber einer Temperaturmessung mit lediglich einem temperaturabhängigen Widerstand vergleichsweise träge einer Temperaturänderung folgen. Dagegen wird die Temperaturänderung durch einen Temperaturaufnehmer, in welchem ein temperaturabhängiger Widerstand mit einem Thermoelementepaar in Differenzschaltung kombiniert ist, schnell und genau erfasst, wie es der Verlauf der Summenspannung $U_s$ wiedergibt. Damit der Verlauf der Summenspannung $U_s$ im Anfangsbereich nicht über den stationären Endwert des Messwerts überschwingt oder wesentlich unter diesem Endwert bleibt, wird der in dem temperaturabhängigen Widerstand eingespeiste Strom in besonderer Weise an die aktuelle Arbeitstemperatur angepasst. Wie in Figur 1 dargestellt, wandelt ein A/D-Wandler 2 die analoge Summenspannung $U_s$ und eine analoge Referenzspannung $U_{Rref}$, die über einem Referenzwiderstand Rref abgegriffen wird, in digitale Werte für eine Recheneinheit 3 um. Diese Recheneinheit 3 kann beispielsweise durch eine in der Messumformertechnik übliche Mikroprozessorschaltung realisiert werden. Anhand dieser Werte ermittelt die Recheneinheit 3 die Temperatur des Messmediums. Ein durch die Recheneinheit 3 ermittelter Messwert der Temperatur des Messmediums wird als Anzeigesignal auf einer Anzeigeeinheit 6 ausgegeben. Insbesondere im statischen Fall ist die Summenspannung $U_s$ gleich der am temperaturabhängigen Widerstand RTD abfallenden Spannung $U_{RTD}$, da sich die beiden Thermoelemente TC1 und TC2 auf gleichem Temperaturniveau befinden und daher die Spannung $\Delta U_{TC}$ = Null ist. Ist die Arbeitstemperatur bekannt, ermittelt die Recheneinheit 3 anhand einer Temperaturkennlinie der Temperaturempfindlichkeit $E_{TC}$ für die Differenzschaltung der Temperaturelemente TC1 und TC2, die in einem Kennlinienspeicher 4 abgelegt ist, die Empfindlichkeit $E_{TC}$ bei der aktuellen Arbeitstemperatur. Für die Empfindlichkeit $E_{TC}$ gilt:

$$E_{TC} = \Delta U_{TC} / \Delta T$$

mit

$\Delta T$ - Differenz der beim Thermoelement TC1 und beim Thermoelement TC2 herrschenden Temperaturen.

Zusätzlich wird anhand einer weiteren, im Kennlinienspeicher 4 hinterlegten Temperaturkennlinie für die Temperaturempfindlichkeit $E_{RTD}$ des temperaturabhängigen Widerstands RTD die Empfindlichkeit $E_{RTD}$ des Widerstands RTD bei der aktuellen Arbeitstemperatur ermittelt. Es gilt für die Empfindlichkeit $E_{RTD}$:

$$E_{RTD} = \Delta R_{RTD} / \Delta T$$

mit

$\Delta R_{RTD}$ - Änderung des Werts $R_{RTD}$ des Widerstands RTD bei einer Änderung der aktuellen Temperatur um die Temperaturdifferenz $\Delta T$.

Nun sind die Empfindlichkeiten $E_{TC}$ und $E_{RTD}$ bekannt. Die Recheneinheit 3 ermittelt einen Wert für einen bei der aktuellen Arbeitstemperatur einzustellenden Strom $I_{RTD}$, mit welchem der temperaturabhängige Widerstand RTD zu speisen ist. Es gilt:

$$I_{RTD} = K \cdot \Delta U_{TC}/\Delta R_{RTD}$$

mit

K - eine Konstante.

Die Konstante K liegt üblicherweise etwa bei 1. Der genaue Wert kann jedoch in Abhängigkeit des mechanischen Aufbaus variieren. Er kann experimentell oder rechnerisch ermittelt und als Parameter der Recheneinheit 3 voreingestellt werden. Er wird so gewählt, dass der Messwert bei einer sprungförmigen Temperaturänderung schnell aber ohne Überschwinger auf den neuen stationären Endwert übergeht. Dieses Verhalten entspricht dem in Figur 2 dargestellten Verlauf der Summenspannung $U_s$. Eine programmierbare Stromquelle 5 wird durch die Recheneinheit 3 auf den neu ermittelten Strom $I_{RTD}$ eingestellt. Mit dieser Einstellung ist der Messumformer in der Lage, Temperatursprünge schnell und genau zu erfassen. Damit ist gewährleistet, dass bei Temperaturänderungen die Spannungsänderung der Spannung $\Delta U_{RTD}$ der Spannung $U_{RTD}$ über dem temperaturabhängigen Widerstand RTD und die Änderung der Spannung $\Delta U_{TC}$ des Paares mit den Thermoelementen TC1 und TC2 aufeinander abgestimmt sind.

Die beschriebene Ermittlung des Stromes $I_{RTD}$ zur Speisung des temperaturabhängigen Widerstands RTD kann im statischen Messbetrieb zyklisch erfolgen, so dass er ständig an die aktuelle Arbeitstemperatur angepasst wird. Ein derart ausgebildeter Messumformer ist jederzeit in der Lage, Temperaturänderungen schnell und genau zu messen.

**Patentansprüche**

1. Verfahren zur Temperaturmessung mit einem Messfühler (7), der einen temperaturabhängigen Widerstand (RTD) und zur Kompensation der Trägheit des Widerstands bei dynamischen Temperaturänderungen ein Thermoelementepaar (TC1, TC2) aufweist, das in einer Differenzschaltung betrieben wird, **dadurch gekennzeichnet, dass** der durch den temperaturabhängigen Widerstand fließende Strom ($I_{RTD}$) in Abhängigkeit der aktuellen Arbeitstemperatur derart eingestellt wird, dass er einem für diese Arbeitstemperatur ermittelten Quotienten aus einer Temperaturempfindlichkeit des Thermoelementepaares und einer Temperaturempfindlichkeit des temperaturabhängigen Widerstandes proportional ist.

2. Verfahren nach Anspruch 1, **dadurch gekennzeichnet, dass** der Quotient durch eine Recheneinheit (3) anhand einer in einem Speicher (4) hinterlegten Temperaturkennlinie der Temperaturempfindlichkeit des Thermoelementepaares (TC1, TC2) und einer in einem Speicher (4) hinterlegten Temperaturkennlinie der Temperaturempfindlichkeit des temperaturabhängigen Widerstandes (RTD) ermittelt wird.

3. Einrichtung zur Durchführung des Verfahrens nach Anspruch 1 oder 2 mit einem Messfühler (7), der einen temperaturabhängigen Widerstand (RTD) und zur Kompensation der Trägheit des Widerstands bei dynamischen Temperaturänderungen ein Thermoelementepaar (TC1, TC2) aufweist, das in einer Differenzschaltung betreibbar ist, und mit einer Stromquelle (5), durch welche der durch den temperaturabhängigen Widerstand fließende Strom ($I_{RTD}$) einstellbar ist, **dadurch gekennzeichnet, dass** der Strom ($I_{RTD}$) in Abhängigkeit der aktuellen Arbeitstemperatur derart einstellbar ist, dass er einem für diese Arbeitstemperatur ermittelten Quotienten aus einer Temperaturempfindlichkeit des Thermoelementepaares und einer Temperaturempfindlichkeit des temperaturabhängigen Widerstands proportional ist.

4. Einrichtung nach Anspruch 3, **dadurch gekennzeichnet, dass** Mittel (2) vorgesehen sind zur Messung der Summenspannung ($U_s$) über dem temperaturabhängigen Widerstand (RTD) und dem Thermoelementepaar (TC1, TC2), dass eine Recheneinheit (3) vorhanden ist, durch welche anhand der gemessenen Summenspannung ($U_s$) und dem eingespeisten Strom ($I_{RTD}$) die aktuelle Arbeitstemperatur bestimmbar und ein entsprechendes Signal zur Anzeige ausgebbar ist und dass durch die Recheneinheit (3) anhand einer in einem Speicher (4) hinterlegten Temperaturkennlinie der Temperaturempfindlichkeit des Thermoelementepaares und einer in einem Speicher (4) hinterlegten Temperaturkennlinie der Temperaturempfindlichkeit des temperaturabhängigen Widerstands der Quotient ermittelbar ist.

## FIG 1

## FIG 2

**Europäisches Patentamt**

# EUROPÄISCHER RECHERCHENBERICHT

Nummer der Anmeldung

EP 04 01 6848

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | GB 867 402 A (MALDWYN EDWARD PEPLOW; CENTRAL ELECTR GENERAT BOARD; DOUGLAS HAROLD LU) 10. Mai 1961 (1961-05-10) * Anspruch 1; Abbildung 1 * ----- | 1,3 | G01K7/16 G01K7/02 |
| A | EP 0 775 897 A (HARTMANN & BRAUN AG) 28. Mai 1997 (1997-05-28) * Zusammenfassung * ----- | 1,3 | |
| A | US 3 825 733 A (WHITE D ET AL) 23. Juli 1974 (1974-07-23) * Anspruch 3 * ----- | 1,3 | |

RECHERCHIERTE SACHGEBIETE (Int.Cl.7)

G01K

Der vorliegende Recherchenbericht wurde für alle Patentansprüche erstellt

| Recherchenort | Abschlußdatum der Recherche | Prüfer |
|---|---|---|
| München | 11. November 2004 | Thomte, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 04 01 6848

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-11-2004

| Im Recherchenbericht angeführtes Patentdokument | Datum der Veröffentlichung | Mitglied(er) der Patentfamilie | Datum der Veröffentlichung |
|---|---|---|---|
| GB 867402 A | 10-05-1961 | KEINE | |
| EP 0775897 A | 28-05-1997 | DE 59610150 D1 <br> DE 59610905 D1 <br> EP 1182438 A1 <br> EP 0775897 A1 | 27-03-2003 <br> 04-03-2004 <br> 27-02-2002 <br> 28-05-1997 |
| US 3825733 A | 23-07-1974 | KEINE | |

EPO FORM P0461

Für nähere Einzelheiten zu diesem Anhang : siehe Amtsblatt des Europäischen Patentamts, Nr.12/82